# EUROPÄISCHE PATENTANMELDUNG

(11) **EP 1 726 845 A2**
(43) Veröffentlichungstag der Anmeldung: **29.11.2006**
(21) Anmeldenummer: 06008358.1
(22) Anmeldetag: 22.04.2006
(51) Int. Cl.: F16D 48/02

(54) **Hydraulisches Kupplungsbetätigungssystem**

(30) Priorität: 20.05.2005 DE 102005023208
(71) Anmelder: LuK Lamellen und Kupplungsbau Beteiligungs KG, 77815 Bühl (DE)
(72) Erfinder: Fraser, Leigh, CV22 7DA Bilton Rugby Warwickshire (GB); Lethbridge, James Antony, Leamington Spa Warwickshire CV 31 2 HZ (GB); Riemer, Peter, CV31 2HW Leamington Spa (GB); Watkins, Andrew Murray, CV31 12QJ Whitnash Leamington Spa (GB)

(57) **Zusammenfassung**

Die Erfindung betrifft ein hydraulisches Kupplungsbetätigungssystem mit einer hydraulischen Kupplungsbetätigungseinrichtung, die einen ersten Kupplungsgeberzylinder, der über eine erste Druckmediumsleitung mit einem ersten Kupplungsnehmerzylinder in Verbindung steht, der dazu dient, eine erste Kupplungseinrichtung zu betätigen, und einen zweiten Kupplungsgeberzylinder umfasst, der über eine zweite Druckmediumsleitung mit einem zweiten Kupplungsnehmerzylinder in Verbindung steht, der dazu dient, eine zweite Kupplungseinrichtung zu betätigen, wobei der Druck in der ersten und/oder in der zweiten Druckmediumsleitung über mindestens eine Notöffnungsventileinrichtung entspannbar ist, um in einem Notfall ein Öffnen mindestens einer der Kupplungseinrichtungen zu ermöglichen.

Das hydraulische Kupplungsbetätigungssystem zeichnet sich dadurch aus, dass die Notöffnungsventileinrichtung ein 4/2-Wegeventil umfasst, das einen Anschluss für die erste Druckmediumsleitung, einen Anschluss für die zweite Druckmediumsleitung, einen Anschluss für eine erste Druckentspannungsleitung, die über das 4/2-Wegeventil mit der ersten Druckmediumsleitung verbindbar ist, und einen Anschluss für eine zweite Druckentspannungsleitung aufweist, die über das 4/2-Wegeventil mit der zweiten Druckmediumsleitung verbindbar ist.

Andere beanspruchte Kupplungsbetätigungssysteme weisen 2/2-Wegeventile auf.

## Beschreibung

Die Erfindung betrifft ein hydraulisches Kupplungsbetätigungssystem mit einer hydraulischen Kupplungsbetätigungseinrichtung, die einen ersten Kupplungsgeberzylinder, der über eine erste Druckmediumsleitung mit einem ersten Kupplungsnehmerzylinder in Verbindung steht, der dazu dient, eine erste Kupplungseinrichtung zu betätigen, und einen zweiten Kupplungsgeberzylinder umfasst, der über eine zweite Druckmediumsleitung mit einem zweiten Kupplungsnehmerzylinder in Verbindung steht, der dazu dient, eine zweite Kupplungseinrichtung zu betätigen, wobei der Druck in der ersten und/oder in der zweiten Druckmediumsleitung über mindestens eine Notöffnungsventileinrichtung entspannbar ist, um in einem Notfall ein Öffnen mindestens einer der Kupplungseinrichtungen zu ermöglichen.

Bei den Kupplungseinrichtungen handelt es sich vorzugsweise um Reibungskupplungen. Das hydraulische Kupplungsbetätigungssystem wird auch als hydraulisches Ausrücksystem bezeichnet, das manuell oder automatisch betätigte Geberzylinder und die Kupplungen ausrückende Nehmerzylinder umfasst. Bei so genannten zwangsweise zugedrückten Kupplungen ist im kraftfreien Zustand der Kupplung die Kupplung ausgerückt und der Reibeingriff zum Verbinden einer Brennkraftmaschine mit einem Getriebe erfolgt durch Betätigen und Halten des Nehmerzylinders unter Druck durch den Geberzylinder. Insbesondere für Doppelkupplungen, bei denen ein gemeinsames Eingangsteil auf zwei Ausgangsteile mit jeweils einer Getriebeeingangswelle verzweigt wird, ist diese Art der Betätigung der Kupplungen vorteilhaft. Wenn beide oder eine der Kupplungsbetätigungseinrichtungen, die auch als Ausrückvorrichtungen bezeichnet werden, beispielsweise durch Druckmittelverlust ausfallen, so werden diese Kupplungen stets geöffnet und verblocken nicht das Getriebe, wie es beispielsweise bei gewöhnlichen im kraftfreien Zustand geschlossenen Kupplungen der Fall ist. Reibungskupplungen der genannten Art werden in der Regel neben manuell betätigten Getrieben in automatisierten Getrieben eingesetzt, beispielsweise in automatisierten Schaltgetrieben (ASG) oder Doppelkupplungsgetrieben (PSG), die im allgemeinen von einem Steuergerät angesteuert werden, wobei sowohl das Kuppeln als auch das Ein- und Auslegen der Gänge automatisiert betrieben werden. Fällt ein derartiges Steuergerät aus, kann es in Abhängigkeit der angewandten Steuerstrategie vorkommen, dass die Kupplungsstellung einer Kupplung beziehungsweise in einem Doppelkupplungsgetriebe beider Kupplungen eingefroren wird, und daher der Betrieb der Brennkraftmaschine unabhängig von der Getriebeausgangsdrehzahl und damit der Raddrehzahl nicht mehr steuerbar ist, das heißt, dass beispielsweise bei stehendem Fahrzeug ein Betrieb der Brennkraftmaschine zur Aufrechterhaltung von Nebenaggregaten nicht mehr möglich ist. Um zum Beispiel bei einem Ausfall der Getriebesteuerung das Trennen einer nicht geöffneten Kupplung zu ermöglichen, kann der Druck in der ersten und/oder in der zweiten Druckmediumsleitung über mindestens eine Notöffnungsventileinrichtung entspannt werden.

Aufgabe der Erfindung ist es, ein einfaches und kostengünstiges hydraulisches Kupplungsbetätigungssystem mit einer hydraulischen Kupplungsbetätigungseinrichtung zu schaffen, die einen ersten Kupplungsgeberzylinder, der über eine erste Druckmediumsleitung mit einem ersten Kupplungsnehmerzylinder in Verbindung steht, der dazu dient, eine erste Kupplungseinrichtung zu betätigen, und einen zweiten Kupplungsgeberzylinder umfasst, der über eine zweite Druckmediumsleitung mit einem zweiten Kupplungsnehmerzylinder in Verbindung steht, der dazu dient, eine zweite Kupplungseinrichtung zu betätigen, wobei der Druck in der ersten und/oder in der zweiten Druckmediumsleitung über mindestens eine Notöffnungsventileinrichtung entspannbar ist, um in einem Notfall ein Öffnen mindestens einer der Kupplungseinrichtungen zu ermöglichen.

Die Aufgabe ist bei einem hydraulischen Kupplungsbetätigungssystem mit einer hydraulischen Kupplungsbetätigungseinrichtung, die einen ersten Kupplungsgeberzylinder, der über eine erste Druckmediumsleitung mit einem ersten Kupplungsnehmerzylinder in Verbindung steht, der dazu dient, eine erste Kupplungseinrichtung zu betätigen, und einen zweiten Kupplungsgeberzylinder umfasst, der über eine zweite Druckmediumsleitung mit einem zweiten Kupplungsnehmerzylinder in Verbindung steht, der dazu dient, eine zweite Kupplungseinrichtung zu betätigen, wobei der Druck in der ersten und/oder in der zweiten Druckmediumsleitung über mindestens eine Notöffnungsventileinrichtung entspannbar ist, um in einem Notfall ein Öffnen mindestens einer der Kupplungseinrichtungen zu ermöglichen, dadurch gelöst, dass die Notöffnungsventileinrichtung ein 4/2-Wegeventil umfasst, das einen Anschluss für die erste Druckmediumsleitung, einen Anschluss für die zweite Druckmediumsleitung, einen Anschluss für eine erste Druckentspannungsleitung, die über das 4/2-Wegeventil mit der ersten Druckmediumsleitung verbindbar ist, und einen Anschluss für eine zweite Druckentspannungsleitung aufweist, die über das 4/2-Wegeventil mit der zweiten Druckmediumsleitung verbindbar ist. Dadurch wird auf einfache Art und Weise ermöglicht, beide Druckmediumsleitungen gleichzeitig in einen einzigen Hydraulikspeicher zu entspannen, der einen niedrigeren Druck aufweist, als die Druckmediumsleitungen. Die Betätigung des 4/2-Wegeventils erfolgt vorzugsweise durch einen Elektromagneten.

Die oben angegebene Aufgabe ist bei einem hydraulischen Kupplungsbetätigungssystem nach dem Oberbegriff des Anspruchs 1 auch dadurch gelöst, dass die Notöffnungsventileinrichtung zwei 2/2-Wegeventile umfasst, die jeweils einen Anschluss für eine der Druckmediumsleitungen und jeweils einen Anschluss für eine der Druckentspannungsleitungen aufweisen, die über das jeweilige 2/2-Wegeventil mit der zugehörigen Druckmediumsleitung verbindbar ist. Durch die beiden separaten 2/2-Wegeventile wird eine gezielte Druckentspannung in einer der Druckmediumsleitungen oder in beiden Druckmediumsleitungen ermöglicht.

Bei einem hydraulischen Kupplungsbetätigungssystem nach dem Oberbegriff des Anspruchs 1 ist die vorab angegebene Aufgabe auch dadurch gelöst, dass die Notöffnungsventileinrichtung ein 2/2-Wegeventil umfasst, das einen gemeinsamen Anschluss für die beiden Druckmediumsleitungen und einen Anschluss für eine Druckentspannungsleitung aufweist, die über das 2/2-Wegeventil mit den beiden Druckmediumsleitungen verbindbar ist. Diese Lösung hat den Vorteil, dass der Konstruktive Aufwand gering gehalten werden kann.

Ein bevorzugtes Ausführungsbeispiel des hydraulischen Kupplungsbetätigungssystems ist dadurch gekennzeichnet, dass in den Druckmediumsleitungen jeweils ein Rückschlagventil so angeordnet ist, dass ein Druckausgleich zwischen den Druckmediumsleitungen verhindert wird. Durch die beiden Rückschlagventile wird insbesondere ein Druckausgleich über den gemeinsamen Anschluss des 2/2-Wegeventils verhindert.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Antriebsstrangs eines Kraftfahrzeugs mit einem hydraulischen Kupplungsbetätigungssystem, das eine Notöffnungsventileinrichtung aufweist, die ein 4/2-Wegeventil umfasst;
- Figur 2: eine schematische Darstellung eines Antriebsstrangs eines Kraftfahrzeugs mit einem hydraulischen Kupplungsbetätigungssystem, das eine Notöffnungsventileinrichtung aufweist, die zwei 2/2-Wegeventile umfasst;
- Figur 3: eine schematische Darstellung eines Antriebsstrangs eines Kraftfahrzeugs mit einem hydraulischen Kupplungsbetätigungssystem, das eine Notöffnungsventileinrichtung aufweist, die zwei 2/2-Wegeventile umfasst, die mit unterschiedlichen Hydraulikspeichern in Verbindung stehen;
- Figur 4: eine schematische Darstellung eines Antriebsstrangs eines Kraftfahrzeugs mit einem hydraulischen Kupplungsbetätigungssystem, das eine Notöffnungsventileinrichtung aufweist, die ein 4/2-Wegeventil umfasst, das mit einem einzigen Hydraulikspeicher in Verbindung steht;
- Figur 5: eine schematische Darstellung eines Antriebsstrangs eines Kraftfahrzeugs mit einem hydraulischen Kupplungsbetätigungssystem, das eine Notöffnungsventileinrichtung aufweist, die zwei 2/2-Wegeventile umfasst, die jeweils mit einem Hydraulikspeicher in Verbindung stehen;
- Figur 6: eine schematische Darstellung eines Antriebsstrangs eines Kraftfahrzeugs mit einem hydraulischen Kupplungsbetätigungssystem, das eine Notöffnungsventileinrichtung aufweist, die ein 2/2-Wegeventil umfasst, das einen gemeinsamen Anschluss für zwei Druckmediumsleitungen aufweist und
- Figur 7: eine schematische Darstellung eines Antriebsstrangs eines Kraftfahrzeugs mit einem hydraulischen Kupplungsbetätigungssystem, das eine Notöffnungsventileinrichtung aufweist, die ein 2/2-Wegeventil umfasst, in das zwei Rückschlagventile integriert sind.

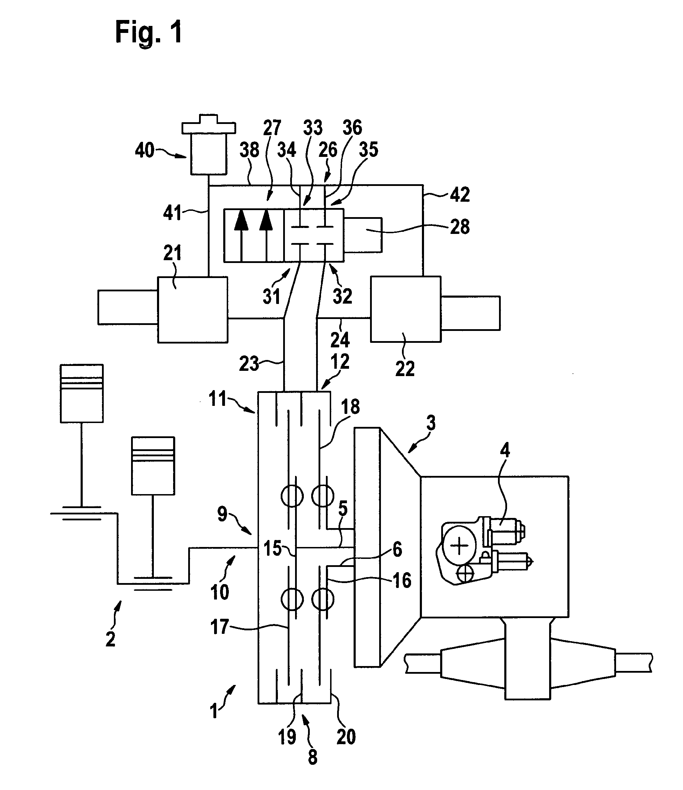

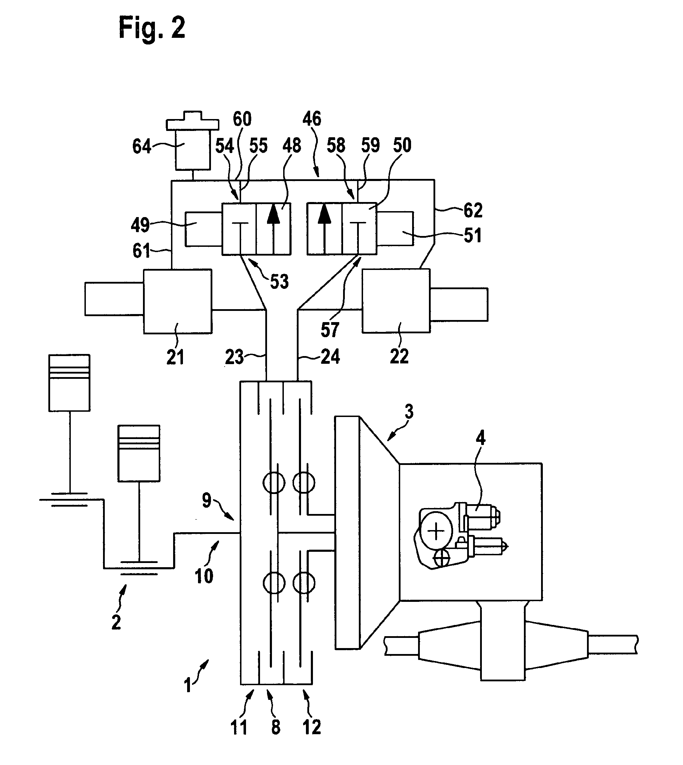

Die Figuren 1 bis 7 zeigen jeweils einen schematisch dargestellten Antriebsstrang 1 eines Kraftfahrzeugs. Aus Gründen der Übersichtlichkeit sind nur in Figur 1 alle Einzelteile des Antriebsstrangs mit Bezugszeichen versehen. In den Figuren 2 bis 7 sind zur Verbesserung der Lesbarkeit der Zeichnung nur die wesentlichen Bezugszeichen aufgeführt. Die folgende ausführliche Beschreibung der Figur 1 gilt auch für die Figuren 2 bis 7. Um Wiederholungen zu vermeiden, wird bei der ausführlichen Beschreibung der Figuren 2 bis 7 nicht die komplette Beschreibung des gesamten Antriebsstrangs wiederholt, sondern im Wesentlichen nur auf die Unterschiede zwischen den in den Figuren 1 bis 7 dargestellten Ausführungsbeispielen eingegangen.

In Figur 1 ist ein Antriebsstrang 1 eines Kraftfahrzeugs schematisch dargestellt. Der Antriebsstrang 1 umfasst eine Brennkraftmaschine 2, der ein Getriebe 3 nachgeordnet ist, das als Doppelkupplungsgetriebe mit zwei Getriebeeingangswellen 5, 6 ausgeführt ist. Im Kraftfluss zwischen der Brennkraftmaschine 2 und dem Getriebe 3 ist eine Doppelkupplung 8 mit einem Eingangsteil 9 angeordnet, das drehfest mit einer Kurbelwelle 10 der Brennkraftmaschine 2 verbunden ist. Die Doppelkupplung 8 umfasst eine erste Kupplungseinrichtung 11 und zweite Kupplungseinrichtung 12. Die beiden Kupplungseinrichtungen 11 und 12 sind vorzugsweise als Reibungskupplungen ausgebildet. Der Aufbau und die Funktion einer Doppelkupplung mit zwei Reibungskupplungen wird als bekannt vorausgesetzt.

Die Doppelkupplung 8 umfasst zwei Ausgangsteile 15, 16, die jeweils drehfest mit einer der Getriebeeingangswellen 5, 6 verbunden sind. Die Ausgangsteile 15,16 sind über Drehschwingungsdämpfungseinrichtungen jeweils mit einer Kupplungsscheibe 17, 18 gekoppelt. Die Kupplungsscheiben 17, 18 weisen Reibbeläge auf, die in Reibeingriff mit dem Eingangsteil 9 der Doppelkupplung 8 gebracht werden können.

Dazu weist das Eingangsteil 9 eine axial fest angeordnete Pressplatte mit beidseitig angeordneten Reibeingriffsflächen auf und ist mit jeweils für ein Ausgangsteil vorgesehenen, axial verlagerbaren und mit dem Eingangsteil 9 verbundenen Ringscheibenteilen 19, 20, die jeweils eine Reibeingriffsfläche aufweisen, drehfest verbunden. Durch Axialverlagerung der Ringscheibenteile 19, 20 wird der Reibeingriff zu den Reibflächen der Ausgangsteile 15, 16 beziehungsweise der Kupplungsscheiben 17, 18 hergestellt. Die Ringflächen sind im kraftfreien Zustand beispielsweise mittels Blattfedern so von der Anpressplatte beabstandet, dass kein Reibeingriff erfolgt, das heißt, dass beide den Ausgangsteilen 15, 16 zugeordneten Kupplungen 11,12 zugedrückte Kupplungen sind.

Die Kupplungen 11, 12 werden jeweils mit einer Axialverlagerung von Ausrückhebeln eingerückt. Dabei werden die Ausrückhebel mit Hilfe von Kupplungsbetätigungsvorrichtungen so lang in diesem Zustand gehalten, bis ein Ausrücken der Kupplung gewünscht ist. Für beide Kupplungen 11, 12 kann eine Nachstellvorrichtung vorgesehen sein, wobei auch eine einzige gemeinsame Nachstellvorrichtung auf beide Kupplungen wirken kann. Es versteht sich, dass im Sinne der Erfindung auch andere Kupplungsformen und Ausgestaltungen, wie beispielsweise zwangsweise zugezogene Kupplungen, vorteilhaft sein können.

Die beiden Reibungskupplungen 11, 12 werden durch Ausrückvorrichtungen betätigt, die jeweils mit einem Nehmerzylinder zusammenwirken, der zum Beispiel als konzentrisch um die Getriebeeingangswellen 5, 6 angeordneter Ringzylinder ausgeführt ist. Die Nehmerzylinder sind über Druckmediumsleitungen 23, 24 jeweils mit einem Geberzylinder 21, 22 verbunden. Die Geberzylinder 21, 22 werden zum Beispiel mittels jeweils eines elektrischen Aktors betätigt.

Je nach Bedarf, vorzugsweise in einem Notfall, kann der Druck in den Druckmediumsleitungen 23, 24 über eine Notöffnungsventileinrichtung 26 schnell abgebaut werden, die auch als Druckentspannungseinrichtung bezeichnet wird. Die Notöffnungsventileinrichtung 26 wird von außen beispielsweise durch den Fahrer angesteuert. Hierzu kann der Fahrer über eine Betätigungsvorrichtung verfügen, die zum Beispiel von einem Wählhebel zum Wählen von Betriebsprogrammen des Kraftfahrzeugs dargestellt werden kann.

Das Getriebe 3 wird beispielsweise mit Hilfe einer Getriebebetätigungseinrichtung 4 betätigt, die wiederum über ein Getriebesteuergerät gesteuert wird. Wenn in einer Notfallssituation das Getriebesteuergerät ausfällt, dann verbleiben die Geberzylinder 21, 22 in ihrer momentanen Position, wodurch die Kupplungen 11, 12 je nach Stellung der zugehörigen Betätigungsvorrichtungen in Reibeingriff bleiben. Um nun ein Abkoppeln der Brennkraftmaschine 2 von dem Getriebe 3 zu ermöglichen, wird vom Fahrer die Betätigungsvorrichtung für die Notöffnungsventileinrichtung 26 aktiviert und damit die Notöffnungsventileinrichtung 26 betätigt, so dass der in den Druckmediumsleitungen 23, 24 aufgebaute Druck abgebaut und die Kupplungen 11, 12 geöffnet werden.

Die Notöffnungsventileinrichtung 26 umfasst in Figur 1 ein 4/2-Wegeventil 27, das mit Hilfe eines Elektromagneten 28 betätigt wird. Das 4/2-Wegeventil 27 umfasst einen Anschluss 31 für die Druckmediumsleitung 23 und einen Anschluss 32 für die Druckmediumsleitung 24. Auf der gegenüberliegenden Seite weist das 4/2-Wegeventil 27 einen Anschluss 33 für eine Druckentspannungsleitung 34 auf, die über das 4/2-Wegeventil 27 mit der Druckmediumsleitung 23 verbindbar ist. Außerdem weist das 4/2-Wegeventil 27 einen Anschluss 35 für eine Druckentspannungsleitung 36 auf, die über das 4/2-Wegeventil 27 mit der Druckmediumsleitung 24 verbindbar ist. In der in Figur 1 dargestellten Stellung des 4/2-Wegeventils 27 sind die Verbindungen zwischen den Druckmediumsleitungen 23, 24 und den Druckentspannungsleitungen 34, 36 unterbrochen. Wenn das 4/2-Wegeventil 27 in seine zweite (in Figur 1 nicht dargestellte Stellung umgeschaltet wird, dann wird jeweils eine Verbindung zwischen den Druckmediumsleitungen 23, 24 und den zugehörigen Druckentspannungsleitungen 34, 36 freigegeben, so dass der Druck in den Druckmediumsleitungen 23, 24 schnell abgebaut werden kann.

Die Druckentspannungsleitungen 34, 36 stehen über eine weitere Druckentspannungsleitung 38 mit einem Hydraulikspeicher 40 in Verbindung, der auch als Nachlaufbehälter bezeichnet wird und einen deutlich geringeren Druck aufweist als die Druckmediumsleitungen 23 und 24.

Der Hydraulikspeicher 40 steht des Weiteren über eine Verbindungsleitung 41, die auch als Nachlaufleitung bezeichnet wird, mit dem Geberzylinder 21 in Verbindung. Des Weiteren steht der Hydraulikspeicher 40 über eine Verbindungsleitung 42, die auch als Nachlaufleitung bezeichnet wird, mit dem Geberzylinder 22 in Verbindung.

Bei dem in Figur 2 dargestellten Ausführungsbeispiel umfasst das hydraulische Kupplungsbetätigungssystem eine Notöffnungsventileinrichtung 46 mit einem ersten 2/2-Wegeventil 48, das durch einen Elektromagneten 49 betätigbar ist, und mit einem zweiten 2/2-Wegeventil 50, das durch einen Elektromagneten 51 betätigbar ist. Das 2/2-Wegeventil 48 weist einen Anschluss 53 für die Druckmediumsleitung 23 auf. Auf der gegenüberliegenden Seite weist das 2/2-Wegeventil 48 einen Anschluss 54 für eine Druckentspannungsleitung 55 auf. In gleicher Weise weist das 2/2-Wegeventil 50 einen Anschluss 57 für die Druckmediumsleitung 24 auf. Auf der gegenüberliegenden Seite weist das 2/2-Wegeventil 50 einen Anschluss 58 für eine Druckentspannungsleitung 59 auf. Die Druckentspannungsleitungen 55 und 59 stehen über eine Verbindungsleitung 60 mit einem Hydraulikspeicher 64 in Verbindung. Der Hydraulikspeicher 64 steht über eine Verbindungsleitung 61, die auch als Nachlaufleitung bezeichnet wird, mit dem Geberzylinder 21 in Verbindung. Des Weiteren steht der Hydraulikspeicher 64 über die Verbindungsleitung 60 und eine Verbindungsleitung 62 mit dem Geberzylinder 22 in Verbindung.

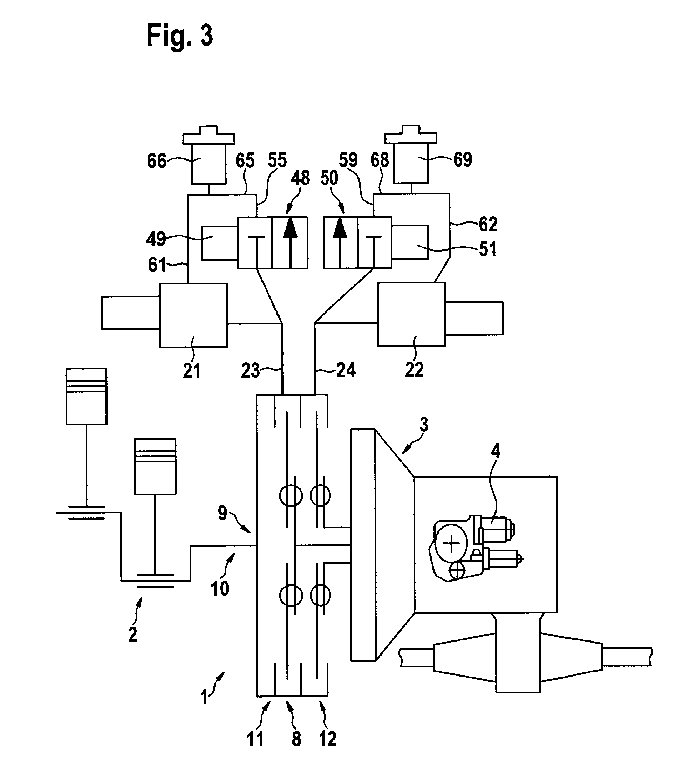

Bei dem in Figur 3 dargestellten hydraulischen Kupplungsbetätigungssystem ist das 2/2-Wegeventil 48 über die Druckentspannungsleitung 55 und eine Verbindungsleitung 65 an einen Hydraulikspeicher 66 angeschlossen, der über die Verbindungsleitung 61 auch mit dem Geberzylinder 21 in Verbindung steht. Das 2/2-Wegeventil 50 ist über die Druckentspannungsleitung 59 und eine Verbindungsleitung 68 an einen weiteren Hydraulikspeicher 69 angeschlossen, der über die Verbindungsleitung 62 mit dem Geberzylinder 22 in Verbindung steht.

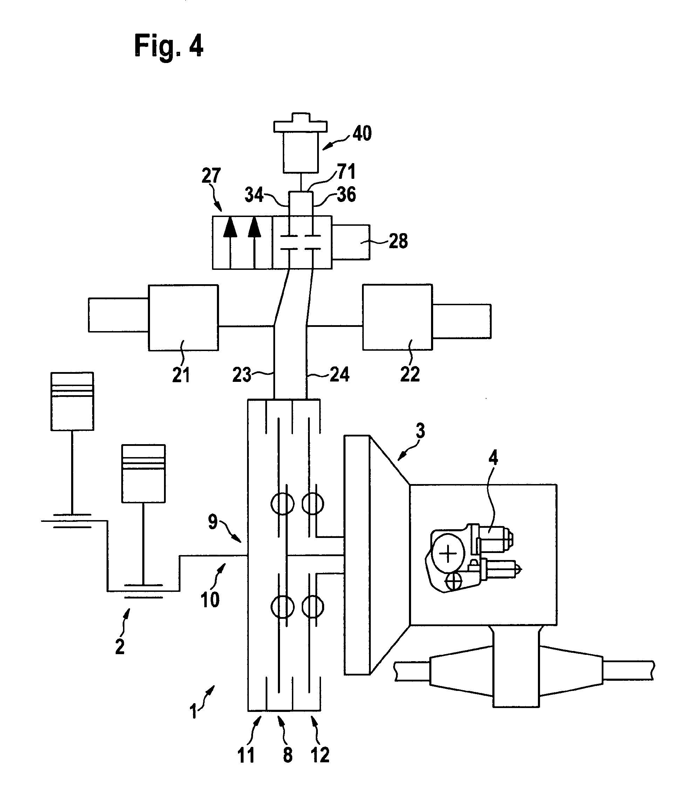

Das in Figur 4 dargestellte Ausführungsbeispiel ähnelt dem in Figur 1 dargestellten Ausführungsbeispiel. Das 4/2-Wegeventil 27 ist über die Druckentspannungsleitungen 34 und 36 und eine Verbindungsleitung 71 an den Hydraulikspeicher 40 angeschlossen. Allerdings steht der Hydraulikspeicher 40 bei dem in Figur 4 dargestellten Ausführungsbeispiel nicht über Verbindungsleitungen (41 und 42 in Figur 1) mit den Geberzylindern 21 und 22 in Verbindung.

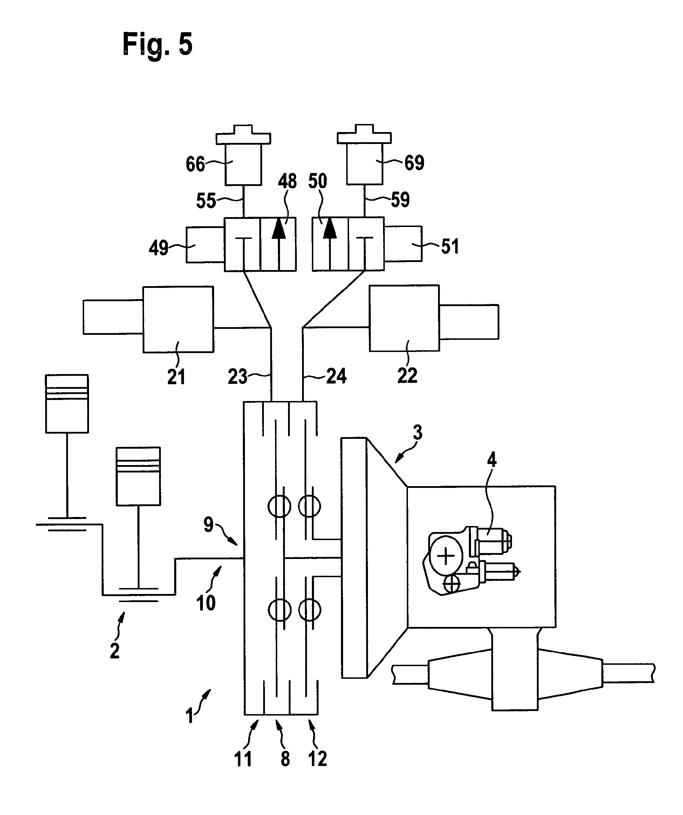

Das in Figur 5 dargestellte Ausführungsbeispiel ähnelt dem in Figur 3 dargestellten Ausführungsbeispiel. Allerdings stehen bei dem in Figur 5 dargestellten Ausführungsbeispiel die Hydraulikspeicher 66 und 69 nicht mit den Geberzylindern 21 und 22 in Verbindung. Gegenüber dem in Figur 3 dargestellten Ausführungsbeispiel entfallen also die Verbindungsleitungen (61 und 62 in Figur 3) zwischen den Geberzylindern 21 und 22 und den Hydraulikspeichern 66 und 69.

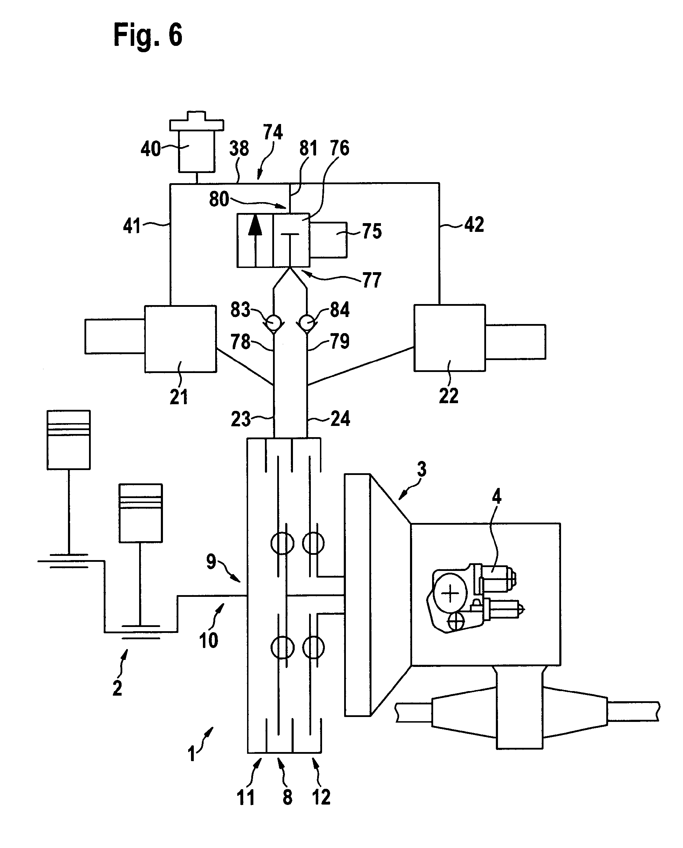

Das in Figur 6 dargestellte hydraulische Kupplungsbetätigungssystem umfasst eine Notöffnungsventileinrichtung 74 mit einem 2/2-Wegeventil 76, das durch einen Elektromagneten 75 betätigbar ist. Das 2/2-Wegeventil 76 weist einen gemeinsamen Anschluss 77 für zwei Abzweigungsleitungen 78 und 79 auf. Die Abzweigungsleitung 78 geht von der Druckmediumsleitung 23 aus. Die Abzweigungsleitung 79 geht von der Druckmediumsleitung 24 aus. Auf der gegenüberliegenden Seite weist das 2/2-Wegeventil 76 einen Anschluss 80 für eine Verbindungsleitung 81 auf, die über die Druckentspannungsleitung 38 mit dem Hydraulikspeicher 40 in Verbindung steht.

Die Abzweigungsleitung 78 ist mit einem Rückschlagventil 83 ausgestattet, das ein Rückströmen von Medium in die Druckmediumsleitung 23 verhindert. In gleicher Weise ist die Abzweigungsleitung 79 mit einem Rückschlagventil 84 ausgestattet, das ein Rückströmen von Medium in die Druckmediumsleitung 24 verhindert.

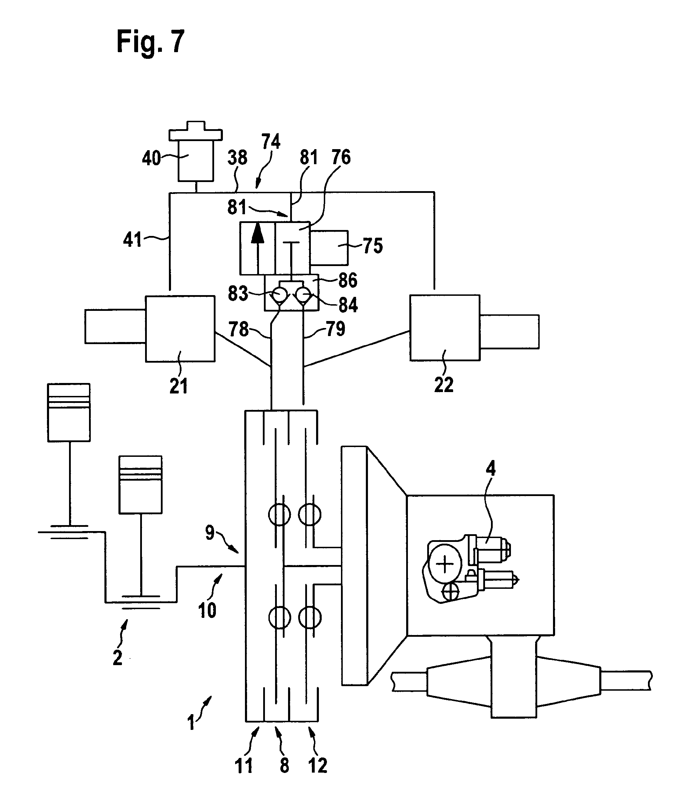

Das in Figur 7 dargestellte Ausführungsbeispiel ähnelt dem in Figur 6 dargestellten Ausführungsbeispiel. Im Unterschied zu dem in Figur 6 dargestellten Ausführungsbeispiel sind bei dem in Figur 7 dargestellten Ausführungsbeispiel die beiden Rückschlagventile 83 und 84 mit dem 2/2-Wegeventil 76 zusammengefasst, wie durch einen Rahmen 86 angedeutet ist, der an das 2/2-Wegeventil 76 angrenzt.

### Bezugszeichenliste

1. Antriebsstrang
2. Brennkraftmaschine
3. Getriebe
4. Getriebebetätigungseinrichtung
5. Getriebeeingangswelle
6. Getriebeeingangswelle
8. Doppelkupplung
9. Eingangsteil
10. Kurbelwelle
11. erste Kupplungseinrichtung
12. zweite Kupplungseinrichtung
15. Ausgangsteil
16. Ausgangsteil
17. Kupplungsscheibe
18. Kupplungsscheibe
19. Ringscheibenteil
20. Ringscheibenteil
21. Geberzylinder
22. Geberzylinder
23. Druckmediumsleitung
24. Druckmediumsleitung
26. Notöffnungsventileinrichtung
27. 4/2-Wegeventil
28. Elektromagnet
31. Anschluss
32. Anschluss
33. Anschluss
34. Druckentspannungsleitung
35. Anschluss
36. Druckentspannungsleitung
38. Druckentspannungsleitung
40. Hydraulikspeicher
41. Verbindungsleitung
42. Verbindungsleitung
46. Notöffnungsventileinrichtung
48. 2/2-Wegeventil
49. Elektromagnet
50. 2/2-Wegeventil
51. Elektromagnet
53. Anschluss
54. Anschluss
55. Druckentspannungsleitung
57. Anschluss
58. Anschluss
59. Druckentspannungsleitung
60. Verbindungsleitung
61. Verbindungsleitung
62. Verbindungsleitung
64. Hydraulikspeicher
65. Verbindungsleitung
66. Hydraulikspeicher
68. Verbindungsleitung
69. Hydraulikspeicher
71. Verbindungsleitung
74. Notöffnungsventileinrichtung
75. Elektromagnet
76. 2/2-Wegeventil
77. Anschluss
78. Abzweigungsleitung
79. Abzweigungsleitung
80. Anschluss
81. Verbindungsleitung
83. Rückschlagventil
84. Rückschlagventil
86. Rahmen

## Patentansprüche

1. Hydraulisches Kupplungsbetätigungssystem mit einer hydraulischen Kupplungsbetätigungseinrichtung, die einen ersten Kupplungsgeberzylinder (21), der über eine erste Druckmediumsleitung (23) mit einem ersten Kupplungsnehmerzylinder in Verbindung steht, der dazu dient, eine erste Kupplungseinrichtung (11) zu betätigen, und einen zweiten Kupplungsgeberzylinder (22) umfasst, der über eine zweite Druckmediumsleitung (24) mit einem zweiten Kupplungsnehmerzylinder in Verbindung steht, der dazu dient, eine zweite Kupplungseinrichtung (12) zu betätigen, wobei der Druck in der ersten und/oder in der zweiten Druckmediumsleitung (23,24) über mindestens eine Notöffnungsventileinrichtung (26) entspannbar ist, um in einem Notfall ein Öffnen mindestens einer der Kupplungseinrichtungen (11,12) zu ermöglichen, **dadurch gekennzeichnet, dass** die Notöffnungsventileinrichtung (26) ein 4/2-Wegeventil (27) umfasst, das einen Anschluss (31) für die erste Druckmediumsleitung (23), einen Anschluss (32) für die zweite Druckmediumsleitung (24), einen Anschluss (33) für eine erste Druckentspannungsleitung (34), die über das 4/2-Wegeventil (27) mit der ersten Druckmediumsleitung (23) verbindbar ist, und einen Anschluss (35) für eine zweite Druckentspannungsleitung (36) aufweist, die über das 4/2-Wegeventil (27) mit der zweiten Druckmediumsleitung (24) verbindbar ist.

2. Hydraulisches Kupplungsbetätigungssystem mit einer hydraulischen Kupplungsbetätigungseinrichtung, die einen ersten Kupplungsgeberzylinder (21), der über eine erste Druckmediumsleitung (23) mit einem ersten Kupplungsnehmerzylinder in Verbindung steht, der dazu dient, eine erste Kupplungseinrichtung (11) zu betätigen, und einen zweiten Kupplungsgeberzylinder (22) umfasst, der über eine zweite Druckmediumsleitung (24) mit einem zweiten Kupplungsnehmerzylinder in Verbindung steht, der dazu dient, eine zweite Kupplungseinrichtung (12) zu betätigen, wobei der Druck in der ersten und/oder in der zweiten Druckmediumsleitung (23,24) über mindestens eine Notöffnungsventileinrichtung (46) entspannbar ist, um in einem Notfall ein Öffnen mindestens einer der Kupplungseinrichtungen (11,12) zu ermöglichen, **dadurch gekennzeichnet, dass** die Notöffnungsventileinrichtung (46) zwei 2/2-Wegeventile (48,50) umfasst, die jeweils einen Anschluss (53,57) für eine der Druckmediumsleitungen (23,24) und jeweils einen Anschluss (54,56) für eine der Druckentspannungsleitungen (55,59) aufweisen, die über das jeweilige 2/2-Wegeventil (48,50) mit der zugehörigen Druckmediumsleitung (23,24) verbindbar ist.

3. Hydraulisches Kupplungsbetätigungssystem mit einer hydraulischen Kupplungsbetätigungseinrichtung, die einen ersten Kupplungsgeberzylinder (21), der über eine erste Druckmediumsleitung (23) mit einem ersten Kupplungsnehmerzylinder in Verbindung steht, der dazu dient, eine erste Kupplungseinrichtung (11) zu betätigen, und einen zweiten Kupplungsgeberzylinder (22) umfasst, der über eine zweite Druckmediumsleitung (24) mit einem zweiten Kupplungsnehmerzylinder in Verbindung steht, der dazu dient, eine zweite Kupplungseinrichtung (12) zu betätigen, wobei der Druck in der ersten und/oder in der zweiten Druckmediumsleitung (23,24) über mindestens eine Notöffnungsventileinrichtung (74) entspannbar ist, um in einem Notfall ein Öffnen mindestens einer der Kupplungseinrichtungen (11,12) zu ermöglichen, **dadurch gekennzeichnet, dass** die Notöffnungsventileinrichtung (74) ein 2/2-Wegeventil (76) umfasst, das einen gemeinsamen Anschluss (77) für die beiden Druckmediumsleitungen (23,24) und einen Anschluss (80) zur Druckentspannung aufweist, die über das 2/2-Wegeventil (76) mit den beiden Druckmediumsleitungen (23,24) verbindbar ist.

4. Hydraulisches Kupplungsbetätigungssystem nach Anspruch 3, **dadurch gekennzeichnet, dass** in den Druckmediumsleitungen (23,24) jeweils ein Rückschlagventil (83,84) so angeordnet ist, dass ein Druckausgleich zwischen den Druckmediumsleitungen (23,24) verhindert wird.
